# EUROPÄISCHE PATENTANMELDUNG

(11) **EP 3 552 976 A1**
(43) Veröffentlichungstag der Anmeldung: **16.10.2019**
(21) Anmeldenummer: 18166615.7
(22) Anmeldetag: 10.04.2018
(51) Int. Cl.: B64F 5/10

(54) **WERKSTÜCKHALTER, VERFAHREN ZUM HERSTELLEN EINES WERKSTÜCKHALTERS UND VERWENDUNG EINES WERKSTÜCKHALTERS**

(71) Anmelder: SFS Intec Holding AG, 9435 Heerbrugg (CH)
(72) Erfinder: RÖSCH, Karl-Naik, 70193 Stuttgart (DE)

(57) **Zusammenfassung**

Die Erfindung betrifft einen Werkstückhalter (10) insbesondere zum Halten von Inserts, die beim Innenausbau von Flugzeugkabinen Verwendung finden. Der Werkstückhalter weist im Wesentlichen die Form eines flachen Tabletts auf mit einer Oberseite (11), einer Unterseite (12) und einem umlaufenden Rand (13). Die Oberseite (11) weist mindestens zwei Gruppen von Vertiefungen auf, wobei die erste Gruppe eine Gruppe von Griffräumen (31, 32,... 36) darstellt und die zweite Gruppe eine Reihe von Taschen (21a-x, 22a-x,... 26a-x) zur Aufbewahrung von Werkstücken bildet. Jede Tasche (21a-x, 22a-x,... 26a-x) ist mit mindestens einem Griffraum (31, 32,... 36) durch eine Zugriffsöffnung verbunden. Die Unterseite (12) hat mindestens eine Gruppe von Erhebungen (41a-x, 42a-x, ...46a-x), deren Aussenform so ausgebildet ist, dass sie mit der Innenform einer Tasche (21a-x, 22a-x,... 26a-x) eine zumindest in Teilbereichen gemeinsame Kontur aufweist und beim Aufeinanderstapeln von Werkstückhaltern (10) eine Spielpassung oder einen Reibsitz erlauben. Das erlaubt eine sichere Stapelung von Werkstückträgern. Ferner betrifft die Erfindung ein Verfahren zum Herstellen eines Werkstückhalters und eine Verwendung desselben.

## Beschreibung

Die Erfindung betrifft einen Werkstückhalter zum Halten von Inserts, die bei einem Innenausbau von Flugzeugkabinen einsetzbar sind. Ferner betrifft die Erfindung ein Verfahren zum Herstellen eines solchen Werkstückhalters sowie dessen Verwendung.

### TECHNISCHER HINTERGRUND

Beim Innenausbau von Flugzeugkabinen wird eine große Anzahl so genannter Inserts verbaut. Diese werden insbesondere in Wandbauteile eingeklebt, welche Hohlräume, zum Beispiel wabenartige Bereiche, enthalten. Derartige Hohlräume bieten in der Regel keinen ausreichenden Halt für herkömmliche Montagemethoden, etwa mittels Schrauben oder Nieten, weshalb die Spezialmontage mit Hilfe von Inserts gewählt wird. Dabei werden die Inserts in Öffnungen der Wandbauteile eingeführt, worauf ein Klebstoff in den Zwischenraum zwischen Insert und Öffnung injiziert wird, der sich dann in der zum Beispiel wabenförmigen Struktur verteilt. Nach dem Aushärten des Klebstoffs kann der Insert dann dafür verwendet werden, um daran weitere Bauteile zu befestigen.

### STAND DER TECHNIK

Es ist bekannt, die Inserts in einem Träger zu fertigen und in diesem Träger auch zum Montageort zu transportieren. Der Monteur, der mit dem Innenausbau der Flugzeugkabine befasst ist, nimmt die Inserts aus dem Träger und führt sie dann ihrem Montageort zu. Ist der Träger entleert, so wird dieser in der Regel wieder verwendet. Dadurch muss der Träger nicht nur die statischen Anforderungen bei der Herstellung, sondern auch den Ansprüchen beim Transport erfüllen. Zudem muss der Träger nach Benutzung rücktransportiert, gereinigt, überprüft, gegebenenfalls repariert oder entsorgt werden. Wegen der Wiederverwertbarkeit werden solche Werkstückträger stabil gebaut und dadurch eher schwer. Die im Umlauf befindlichen Werkstückträger stellen zudem gebundenes Kapital dar und erzeugen gegenüber Einwegverpackungen zusätzliche Transportkosten.

Die DE 10 2005 050 143 B3 zeigt beispielhafte Inserts, für die die vorliegende Erfindung nützlich eingesetzt werden kann.

Es ist eine Aufgabe der Erfindung, einen Werkstückhalter zum Halten von Inserts zur Verfügung zu stellen, der die Konfektionierung, die Lagerung, den Transport und die Montage von Inserts verbessert und vereinfacht. Ferner sollen Herstellung und Verwendung von Werkstückhaltern verbessert werden.

### BESCHREIBUNG DER ERFINDUNG

Diese Aufgabe wird mit dem Merkmalen der unabhängigen Ansprüche gelöst. Vorteilhafte Ausführungsformen der Erfindung sind in den abhängigen Ansprüchen angegeben.

Ein Werkstückhalter 10, der insbesondere zum Halten von Inserts ausgelegt ist, die beim Innenausbau von Flugzeugkabinen verwendbar sind, weist im Wesentlichen die Form eines flachen Tabletts auf mit einer Oberseite 11, einer Unterseite 12 und einem umlaufenden Rand 13. Die geometrische Form des Tablets kann dabei quadratisch, rechteckig oder irregulär sein, mit abgerundeten Ecken je nach Anforderung. Die Dimensionierung wird ein Fachmann nach Gewicht der Inserts, der gewünschten oder geforderten Losgrösse und anderen Verpackungsbestimmungen festlegen. Die Oberseite 11 des Werkstückhalters 10 weist mindestens zwei Gruppen von Vertiefungen auf. Mit Gruppen sind dabei Anordnungen von einzelnen Vertiefungen gemeint, die geometrisch und funktionell unterscheidbar sind, aber nicht voneinander abgeschottet sein müssen. Die erste Gruppe ist eine Gruppe von Griffräumen 31, 32,... 36. Mit Griffräumen - im Gegensatz zu Ablagebereichen, Taschen zur Aufbewahrung verwendet - sind Bereiche gemeint, die den Zugriff (Herausnehmen, Einlegen) auf ein Werkstück erlauben, erleichtern oder ermöglichen. Die zweite Gruppe ist eine Reihe von Taschen 21a-x, 22a-x,... 26a-x zur Aufbewahrung von Werkstücken. Mit Reihe ist dabei nicht zwingend die lineare Anordnung solcher Taschen in einer Linie gemeint. Jede Tasche 21a-x, 22a-x,... 26a-x ist mit mindestens einem Griffraum 31, 32,... 36 durch eine Zugriffsöffnung verbunden. Das Referenzzeichen 21a-x bedeutet eine Vielzahl von gleichartigen Taschen. Die Anzahl und Dimensionierung von Griffräumen und Taschen ist durch die Funktion, Grösse und das Gewicht der Werkstücke bestimmt.

Die Unterseite 12 eines erfindungsgemässen Werkstückhalters 10 weist mindestens eine Gruppe von Erhebungen 41a-x, 42a-x, ...46a-x auf, deren Aussenform so ausgebildet ist, dass sie mit der Innenform einer Tasche 21a-x, 22a-x,... 26a-x eine zumindest in Teilbereichen gemeinsame Kontur aufweist und beim Aufeinanderstapeln von Werkstückhaltern 10 eine Spielpassung oder einen Reibsitz erlauben. Mit anderen Worten, die Aussenkontur der Erhebungen an der Unterseite 12 eines Werkstückhalters 10 sind so ausgelegt, dass sie in die Taschen der Oberseite eines weiteren Werkstückträgers passen. Mit "passen" bzw. Spielpassung ist hierbei gemeint, dass sie ineinandergleiten können. Das Ineinandergleiten erlaubt bevorzugt einen Reibsitz, aber vermeidet ein Klemmen.

Im Einsatz werden die Taschen 21a-x, 22a-x,... 26a-x mit Inserts bestückt und wenn ein Werkstückträger befüllt ist, mit einem weiteren Werkstückträger bedeckt. Die Kontur-Auslegung der Taschen und Erhebungen 41a-x, 42a-x, ...46a-x gleiten dabei soweit ineinander, wie die inliegenden Inserts an Höhe freilassen. Das hat eine Vielzahl von Vorteilen: Zum einen können leere Werkstückträger mit minimalem Platzbedarf gestapelt werden, es bleibt sehr wenig leerer Totraum übrig. Im befüllten Zustand definieren die Werkstücke, wie weit Taschen und Erhebungen ineinander gleiten können. die Werkstücke werden in der Tasche gehalten, aber nicht geklemmt. Ein Verrutschen wird vermindert, ein Herausfallen verhindert. Ist, bei Entnahme, ein Werkstückträger leer, kann er, da nur aufgesetzt, leicht abgehoben werden. Da die Werkstücke selber auch nicht geklemmt wurden, sind sie leicht entnehmbar. Die Greifräume sind dabei so ausgelegt, dass sowohl ein manueller Zugriff wie auch ein Roboter-Greifer möglich sind. Die mindestens eine Zugriffsöffnung zwischen Tasche und Zugriffsraum kann genutzt werden, um die Werkstücke verdrehsicher abzulegen (in Abhängigkeit von der Bauform der Werkstücke).

Ein Werkstückhalter 10 gemäss dieser Erfindung zeichnet sich dadurch aus, dass an seiner Oberseite 11 ein umlaufender Kantenbereich 17 vorhanden ist, der die Ebene der Oberfläche 11 begrenzt. Dieser Kantenbereich ist bevorzugt so ausgebildet, dass er als Auflagefläche für einen weiteren Werkstückhalter dient. Er kann auch Halteelemente aufweisen, die das Stapeln / Abnehmen erleichtern.

An der Unterseite 12 eines Werkstückhalters 10 wird der Rand 13 bevorzugt einen umlaufenden, vorstehenden Kragen 18 besitzen, dessen Unterkante 19 parallel zur Ebene der Oberfläche 11 verläuft. Damit lässt sich ebenfalls die Stapelbarkeit verbessern. Insbesondere bevorzugt ist, dass durch Aufeinanderstapeln zweier Werkstückhalter der Kragen 18 (an der Unterseite) des ersten Werkstückhalters den Kantenbereich 17 (an der Oberseite) des zweiten Werkstückhalters 10 wenigstens teilweise umschliesst. Damit lässt sich erzielen, dass die Werkstücke staubgeschützt sind. Ein Tablett oder Werkstückhalter kann damit immer auch die Funktion eines Deckels auf dem obersten Werkstückhalters eines Stapels erfüllen. Mita nderen Worten, die Innenform des Kragens 18 ist so ausgebildet, dass er mit der Außenform des Kantenbereichs 17 eine zumindest in Teilbereichen gemeinsame Kontur aufweist und beim Aufeinanderstapeln von Werkstückhaltern eine Spielpassung oder einen Reibsitz erlaubt.

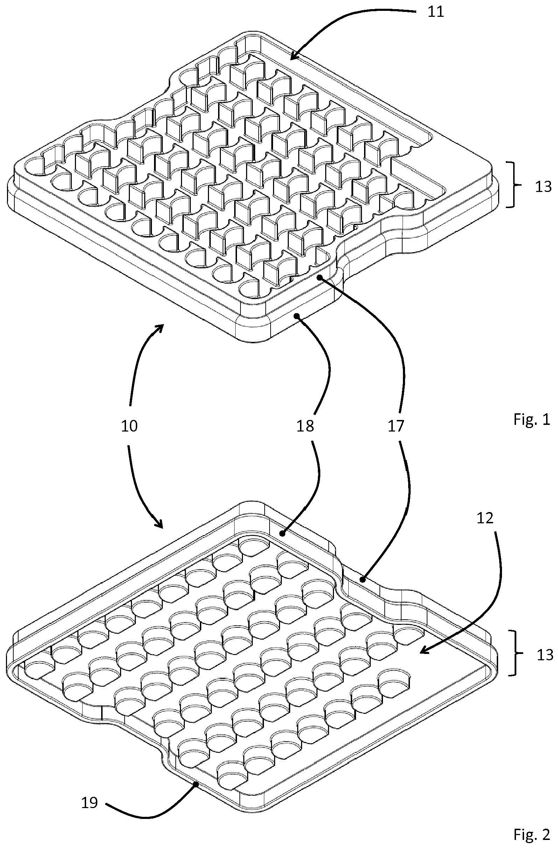

Bevorzugt lässt sich die Innenform einer Tasche 21a-x, 22a-x,... 26a-x als im Wesentlichen zylindrisch beschreiben. Der obigen Beschreibung einer Passung folgend, wird die Aussenform einer Erhebung im Wesentlichen zylinderförmig sein. Wie in den Figuren gezeigt ist die Beschreibung als zylindrisch so zu verstehen, dass die Grundform zylindrisch gewählt ist, aber kein vollständiger Zylinder sein muss. Für die Funktion "Ineinandergleiten" bzw. "Reibsitz" genügen auch sich berührende Teilflächen der Zylinder. Wie in Figur 1 gezeigt, ist die zylindrische Grundform einer Erhebung an der Unterseite dort im Querschnitt als Kreissegment realisiert.

Alternativ kann die Innenform einer Tasche 21a-x, 22a-x,... 26a-x auch als im Wesentlichen vieleckig ausgeführt werden und damit konsequenterweise die Aussenform der Erhebung ebenfalls als polygon beschrieben werden.

Die Bedingung "Ineinandergleiten" kann auch von der Innenform einer Tasche 21a-x, 22a-x,... 26a-x erfüllt werden, die in Teilbereichen konisch und die Aussenform der zugehörigen Erhebung komplementär in Teilbereichen kegelig bzw. kegelstumpfförmig ausgelegt ist.

Es ist nicht zwingend notwendig, ausschliesslich Taschen derselben Grösse (und komplementärer Erhebungen) vorzusehen. Ein Werkstückhalter 10 kann auch Taschen 21a-x, 22a-x,... 26a-x in mindestens zwei unterschiedlich ausgelegten Abmessungen aufweisen. Die Erhebungen als komplementäre Partner folgen jeweils den oben genannten Randbedingungen.

Bevorzugt werden bei einem erfindungsgemässen Werkstückhalter 10 die Vertiefungen 14 zumindest teilweise in Form einer Matrix angeordnet sein. Mit Matrix ist dabei ein regelmässiges Muster oder Raster gemeint, dem die Anordnung der Taschen folgt. Eine solche Matrix kann auch nur Teilbereiche des Werkstückträgers umfassen.

Als Herstellverfahren für Werkstückhalter der genannten Art kommen bevorzugt in Frage:
a) Prägen aus einem heiss- oder kaltverformbaren Material (Plastikplatten, Aluminiumfolie);
c) Spritzgiessen aus einem thermoplastischen Kunststoff, oder
d) Schäumen aus extrudiertem Polystyrol.
e) einen Formteilprozess aus Partikelschäumen
Vor allem letzteres ist die bevorzugte Herstellvariante, da so gleichermaßen leichte wie günstige Werkstückträger hergestellt werden können. Auch gibt es heute bereits biologisch abbaubare Kunststoffe, die gerade für Verpackungsmaterialien einsetzbar sind. Eine gezielte Entsorgung / Kompostierung kann umwelttechnisch sinnvoller sein als ein Sammeln, Rücktransportieren und Lagern von Mehrwegverpackungen.

Wie bereits erwähnt finden die erfindungsgemässen Werkstückträger Verwendung bei der Konfektionierung und/oder zur Lagerung und/oder zum Transport und/oder zur Montage von Inserts, die bei einem Innenausbau von Flugzeugkabinen einsetzbar sind.

### BESCHREIBUNG DER FIGUREN

Die Erfindung wird nun mit Bezug auf die begleitenden Zeichnungen anhand besonders bevorzugter Ausführungsformen beispielhaft erläutert.
- Figur 1: zeigt eine perspektivische Sicht auf einen erfindungsgemäßen Werkstückhalter von oben
- Figur 2: zeigt eine perspektivische Sicht auf einen erfindungsgemäßen Werkstückhalter von unten
- Figur 3: zeigt eine Aufsicht eines erfindungsgemässen Werkstückhalters
- Figur 4: zeigt eine Untersicht eines erfindungsgemässen Werkstückhalters

Figur 1 zeigt eine perspektivische Draufsicht auf einen erfindungsgemäßen Werkstückhalter 10. Der Werkstückhalter 10 hat eine flächige Ausdehnung mit einer Oberfläche 11. Mehrere Vertiefungen sind vorgesehen. Die gezeigte Variante bietet Platz für mehrere Reihen nebeneinander angeordneter Werkstücke (in der Zeichnung weggelassen. Der Rand 13 eines Werkstückträgers 10 umfasst zwei wesentliche Bestandteile, den Kantenbereich 17 der Oberseite 11 und den Kragenbereich bzw. Kragen 18 mit einer Abschlusskante 19 (Unterkante). Diese dient zum einen als Aufstellfläche, wenn ein Werkstückträger auf einer ebenen Fläche positioniert wird, zum anderen als umlaufende Abdeckung des Zwischenraums zwischen zwei Werkstückträgern. Figur 2 zeigt einen baugleichen Werkstückträger von der Unterseite.

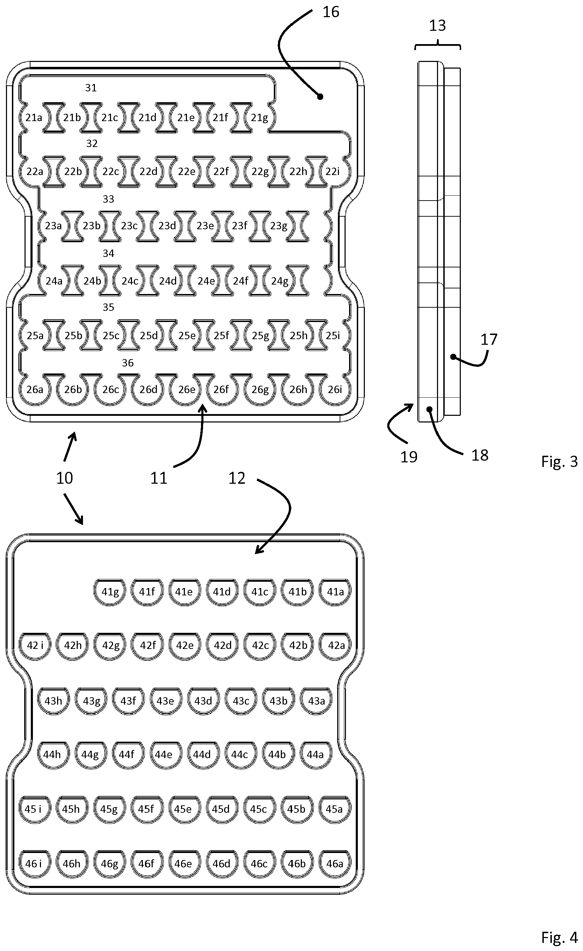

Figur 3 und 4 zeigen ebenfalls eine Oberseite 11 bzw. Unterseite 12 des erfinderischen Werkstückträgers 10. Es ist anzumerken dass alle 4 Zeichnungen eine sehr bevorzugte Ausführungsform zeigen, die sich für den genannten Anwendungszweck besonders eignet. Die darstellung sei allerdings nicht limitierend verstanden. Figur 3 zeigt die als Taschen 21a-x, 22a-x,... 26a-x bezeichneten Werkstückhalterungen und die zugehörigen Griffräume 31, 32, ... 36. 16 bezeichnet einen Bereich für Kennzeichnung der Werkstücke. Dies kann ein aufzuklebendes Label oder eine andere Beschriftung, ein Barcode, eine Firmenbezeichnung oder ein Typenlabel sein.

Im Bild rechts ist eine Seitenansicht eines Werkstückträgers 10 mit dem Rand 13 und dessen Untergliederungen Kantenbereich 17 und Kragen bzw. Kragenbereich 18 zu erkennen. 19 markiert die Unterkante 19, die als Standfuss einerseits oder beim Stapeln als Randabdichtung dient.

Figur 4 zeigt die Unterseite 12 eines Werkstückhalters 10. Die Erhebungen sind mit 41a-x, 42a-x, ...46a-x bezeichnet. Die Buchstabenreihenfolge ist im Vergleich zur Oberseite umgekehrt um die Paarung a-a, b-b, c-c, ... zu verdeutlichen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein. Eine nicht-explizite Darstellung einer Kombination von Merkmalen bedeutet nicht, dass eine solche Kombination nicht sinnvoll oder nicht möglich ist.

### BEZUGSZEICHEN

- 10: Werkstückhalter
- 11: Oberseite
- 12: Unterseite
- 13: Rand
- 16: Bereich für Kennzeichnung der Werkstücke
- 17: Kantenbereich
- 18: Kragen, Kragenbereich
- 19: Unterkante

- 21a, b, ... 22a, b,...: Vertiefung(en), Tasche(n)
- 31, 32,...36: Griffraum, Griffräume
- 41a, b, ... 42a, b, ...: Erhebungen

## Patentansprüche

1. Werkstückhalter (10) insbesondere zum Halten von Inserts zur Verwendung beim Innenausbau von Flugzeugkabinen, wobei der Werkstückhalter (10) im Wesentlichen die Form eines flachen Tabletts aufweist mit einer Oberseite (11), einer Unterseite (12) und einem umlaufenden Rand (13), **dadurch gekennzeichnet, dass**
• die Oberseite (11) mindestens zwei Gruppen von Vertiefungen aufweist, wobei die erste Gruppe eine Gruppe von Griffräumen (31, 32,... 36) darstellt und die zweite Gruppe eine Reihe von Taschen (21a-x, 22a-x,... 26a-x) zur Aufbewahrung von Werkstücken darstellt, wobei jede Tasche (21a-x, 22a-x,... 26a-x) mit mindestens einem Griffraum (31, 32,... 36) durch eine Zugriffsöffnung verbunden ist;
• die Unterseite (12) mindestens eine Gruppe von Erhebungen (41a-x, 42a-x, ...46a-x) aufweist, deren Aussenform so ausgebildet ist, dass sie mit der Innenform einer Tasche (21a-x, 22a-x,... 26a-x) eine zumindest in Teilbereichen gemeinsame Kontur aufweist und beim Aufeinanderstapeln von Werkstückhaltern (10) eine Spielpassung oder einen Reibsitz erlauben.

2. Werkstückhalter (10) nach Anspruch 1, **dadurch gekennzeichnet, dass** der Werkstückhalter an seiner Oberseite (11) einen umlaufenden Kantenbereich (17) aufweist, der die Ebene der Oberfläche (11) begrenzt.

3. Werkstückhalter (10) nach Anspruch 1 bis 2, **dadurch gekennzeichnet, dass** der umlaufende Rand (13) des Werkstückhalters (10) auf seiner der Oberfläche (11) entgegengesetzten Unterseite (12) einen umlaufenden, vorstehenden Kragen (18) besitzt dessen Unterkante (19) parallel zur Ebene der Oberfläche (11) verläuft.

4. Werkstückhalter (10) nach Anspruch 1 bis 3, **dadurch gekennzeichnet, dass** durch Aufeinanderstapeln zweier Werkstückhalter der Kragen (18) des ersten Werkstückhalters den Kantenbereich (17) des zweiten Werkstückhalters (10) wenigstens teilweise umschliesst.

5. Werkstückhalter (10) nach Anspruch 1-4, **dadurch gekennzeichnet, dass** die Innenform einer Tasche (21a-x, 22a-x,... 26a-x) im Wesentlichen zylindrisch und die Aussenform einer Erhebung im Wesentlichen zylinderförmig ist.

6. Werkstückhalter (10) nach Anspruch 1-4, **dadurch gekennzeichnet, dass** die Innenform einer Tasche (21a-x, 22a-x,... 26a-x) im Wesentlichen vieleckig und die Aussenform einer Erhebung ebenfalls polygon ist.

7. Werkstückhalter (10) nach Anspruch 1-6, **dadurch gekennzeichnet, dass** die Innenform einer Tasche (21a-x, 22a-x,... 26a-x) in Teilbereichen konisch und die Aussenform einer Erhebung komplementär in Teilbereichen kegelig bzw. kegelstumpfförmig ist.

8. Werkstückhalter (10) nach einem der vorhergehenden Ansprüche, **dadurch gekennzeichnet, dass** die Taschen (21a-x, 22a-x,... 26a-x) in mindestens zwei unterschiedlich ausgelegten Abmessungen vorliegen.

9. Werkstückhalter (10) nach einem der vorhergehenden Ansprüche, **dadurch gekennzeichnet, dass** die Vertiefungen (14) zumindest teilweise in Form einer Matrix angeordnet sind.

10. Verfahren zum Herstellen eines Werkstückhalters (10) nach einem der vorhergehenden Ansprüche durch
- Prägen aus einem heiss- oder kaltverformbaren Material, oder
- Spritzgiessen aus einem thermoplastischen Kunststoff, oder
- Schäumen aus extrudiertem Polystyrol
- einen Formteilprozess aus Partikelschäumen

11. Verwendung eines Werkstückhalters (10) nach einem der Ansprüche 1 bis 10 zur Konfektionierung und/oder zur Lagerung und/oder zum Transport und/oder zur Montage von Inserts (12), die bei einem Innenausbau von Flugzeugkabinen einsetzbar sind.
